# EUROPÄISCHE PATENTSCHRIFT

(11) **EP 2 216 697 B1**
(45) Veröffentlichungstag und Bekanntmachung des Hinweises auf die Patenterteilung: **29.11.2017**
(21) Anmeldenummer: 09152432.2
(22) Anmeldetag: 10.02.2009
(51) Int. Cl.: G05B 19/4061, B25J 9/16

(54) **Werkzeugmaschine und Verfahren zur Vermeidung einer Kollision bei einer Werkzeugmaschine**
Machine tool and method for avoiding collision within a machine tool
Machine outil et procédé pour éviter une collision dans une machine outil

(43) Veröffentlichungstag der Anmeldung: 11.08.2010
(73) Patentinhaber: Siemens Aktiengesellschaft, 80333 München (DE)
(72) Erfinder: Speth, Wolfgang Dr., 71723 Grossbottwar (DE); Tolkmitt, Tom, 90768 Fürth (DE); Uhlich, Andreas, 90530 Wendelstein (DE)

(56) Entgegenhaltungen:
- WO-A1-2008/025577
- DE-A1- 10 044 306
- DE-A1- 10 257 229
- Schmitt et al.: "Einführung in das CaRo-Projekt:Geometrie- und Texturerfassung von 3D-Objekten mitrobotergeführter Videokamera Interner Bericht 11/98", Internet, 15 May 1998 (1998-05-15), Retrieved from the Internet: URL:http://digbib.ubka.uni-karlsruhe.de/vo lltexte/documents/766028 [retrieved on 2012-11-19]

## Beschreibung

Die Erfindung betrifft ein Verfahren zur Vermeidung einer Kollision bei einer Werkzeugmaschine. Weiterhin betrifft die Erfindung eine diesbezügliche Werkzeugmaschine.

Bei Werkzeugmaschinen können Kollisionen zwischen Maschinenelementen und/oder Werkzeugen mit einem Gegenstand Schäden und lange Stillstandszeiten der Werkzeugmaschine verursachen Der Gegenstand kann dabei z.B. in Form eines Werkstücks oder einer Werkstückspanneinrichtung vorliegen, während das Maschinenelement z.B. als Motor, der rotierend ein Werkzeug antreibt, ausgebildet sein kann.

Bei Werkzeugmaschinen werden die Teileprogramme, die die Werkzeugmaschine steuern, heute über ein CAD/CAM-System erzeugt. Die dort verwendeten Programme besitzen oftmals die Möglichkeit, einen Kollisions-Check durchzuführen. Dadurch können Fehler beim Erstellen des Teileprogramms bereits während der Konstruktionsphase aufgedeckt werden. Um einen solchen Kollisions-Check durchführen zu können, muss aber schon sehr früh in der Konstruktionsphase feststehen, an welcher Werkzeugmaschine das Teil später gefertigt werden soll. Weiterhin treten hier auch häufig Fehler auf, da das Werkstück später auf einer anderen Werkzeugmaschine bearbeitet wird, als dies während der Konstruktionsphase vorgesehen war.

Weiterhin ist bekannt, die Abmessungen eines zu bearbeitenden Werkstücks in eine Werkzeugmaschine einzugeben und diese Maße zur Realisierung eines Kollisionsschutzes zu verwenden.

Aus der Veröffentlichung "Safety ist Trumpf", Markt & Technik, Seite 24, Heft Nr. 22 / 1.6.2007, ist ein System zum dreidimensionalen Überwachen von Gefahrenzonen bei Maschinen, Robotern oder Anlagen bekannt. Ein Anwender, der einen Schutzraum betritt, wird dabei von dem System erfasst und es wird ein Warnsignal erzeugt.

**Aus der Offenlegungsschrift** DE 100 44 306 A1 **ist eine Werkzeugmaschine zur Bearbeitung eines Werkstückes mit einem Werkzeug bekannt, die eine Kamera umfasst, mittels derer Daten bezüglich der Geometrie des Werkzeugs, des Werkstücks oder sonstiger Teile der Werkzeugmaschine generiert werden können. Die Daten werden dazu verwendet, um Kollisionen, beispielsweise des Werkzeugs mit dem Werkstück, zu vermeiden.**

**Aus der Druckschrift** WO 2008/025577 A1 **ist eine Werkzeugmaschine bekannt, mit der mittels zweier zueinander beabstandet angeordneter Kameras im Arbeitsraum der Maschine befindliche Strukturen dreidimensional erfasst werden. Es erfolgt eine automatische Ermittlung von Geometrie und Position der sich im Arbeitsraum befindlichen Maschinenelemente und Gegenstände.**

**Aus der Offenlegungsschrift** DE 102 57 229 A1 **sind eine Vorrichtung zur Steuerung einer Werkzeugmaschine sowie eine Werkzeugmaschine bekannt, die einen optischen Sensor umfassen, der beispielsweise aus einem Messlaser oder einer Kamera besteht. Mittels des Sensors können beispielsweise Daten bezüglich der Geometrie eines Werkstücks erzeugt werden.**

**Aus dem "Internen Bericht 11/98" der Universität Karlsruhe von Schmidt et al: "Einführung in das CaRo-Projekt: Geometrie- und Texturerfassung von 3D-Objekten mit robotergeführter Videokamera", 15.Mai 1998, geht ein System zur Erfassung von Form- und Oberflächendaten für 3D-Objekte hervor, bei dem eine an einem Roboterarm befestigte Kamera gemäß einer Erfassungsstrategie aus verschiedenen Richtungen auf ein zu digitalisierendes Objekt, z.B. ein Werkstück des Maschinenbaus, gerichtet wird.**

Es ist Aufgabe der Erfindung, Kollisionen bei Werkzeugmaschinen zu vermeiden.

Diese Aufgabe wird gelöst durch ein Verfahren nach Anspruch 1. Weiterhin wird diese Aufgabe gelöst durch eine Werkzeugmaschine nach Anspruch 5. Vorteilhafte Ausbildungen der Erfindung ergeben sich aus den abhängigen Ansprüchen.

Vorteilhafte Ausbildungen des Verfahrens ergeben sich analog zu vorteilhaften Ausbildungen der Werkzeugmaschine oder umgekehrt.

Es erweist sich als vorteilhaft, wenn im Bezug auf das Maschinenkoordinatensystem ein 3-dimensionales geometrisches Modell eines Werkzeugs anhand von Geometriedaten des Werkzeugs und Lagedaten ermittelt wird, wobei bei einer Bewegung des Gegenstands und/oder des Werkzeugs überwacht wird ob bei Fortsetzung der Bewegung eine ungewollte Kollision zwischen dem auf das Maschinenkoordinatensystem bezogenen 3-dimensionalen geometrischen Modell des Gegenstands und dem 3-dimensionalen geometrischen Modell des Werkzeugs zu erwarten ist, wobei falls eine ungewollte Kollision zu erwarten ist, die Bewegung gestoppt wird. Hierdurch kann auch eine ungewollte Kollision zwischen einem Werkzeug und dem Gegenstand erkannt werden.

Ferner erweist es sich als vorteilhaft, wenn der Gegenstand als Werkstück oder als Werkstückspannvorrichtung ausgebildet ist. Eine Ausbildung des Gegenstands als Werkstück oder als Werkstückspannvorrichtung stellt eine übliche Ausbildung des Gegenstands dar.

Ferner erweist es sich als vorteilhaft, wenn der Grad der Übereinstimmung der Geometrie des auf das Kamerakoordinatensystem bezogenen 3-dimensionalen geometrischen Modells des Gegenstands mit dem Gegenstand vorgegebenen wird und das auf das Kamerakoordinatensystem bezogene 3-dimensionale geometrische Modells des Gegenstands unter Berücksichtigung des vorgegebenen Grads der Übereinstimmung ermittelt wird. Erfindungsgemäß wird von einer einzelnen Kamera der Gegenstand optisch erfasst, wobei die Kamera und/oder der Gegenstand zur Erfassung des Gegenstands bewegt wird und der Gegenstand aus mindestens zwei verschiedenen Perspektiven von der Kamera optisch erfasst wird. Bei dieser Ausführung der Erfindung wird nur eine einzelne Kamera benötigt, um den Gegenstand 3-dimensional optisch zu erfassen.

Ferner ist die Kamera bei der Erfassung in eine Werkzeugaufnahmevorrichtung der Werkzeugmaschine eingespannt. Hierdurch lässt sich die Kamera auf einfache Art und Weise an der Werkzeugmaschine anbringen. Ferner erweist es sich als vorteilhaft, wenn der Gegenstand von mindestens zwei Kameras optisch erfasst wird. Hierdurch kann der Gegenstand besonders schnell optisch 3-dimensional erfasst werden.

Zwei Ausführungsbeispiele der Erfindung sind in der Zeichnung dargestellt und werden im Folgenden näher erläutert. Dabei zeigen:
- FIG 1: ein erstes Ausführungsbeispiel einer erfindungsgemäßen Werkzeugmaschine,
- FIG 2: ein Blockschaltbild der erfindungsgemäßen Werkzeugmaschine und
- FIG 3: ein zweites Ausführungsbeispiel einer erfindungsgemäßen Werkzeugmaschine.

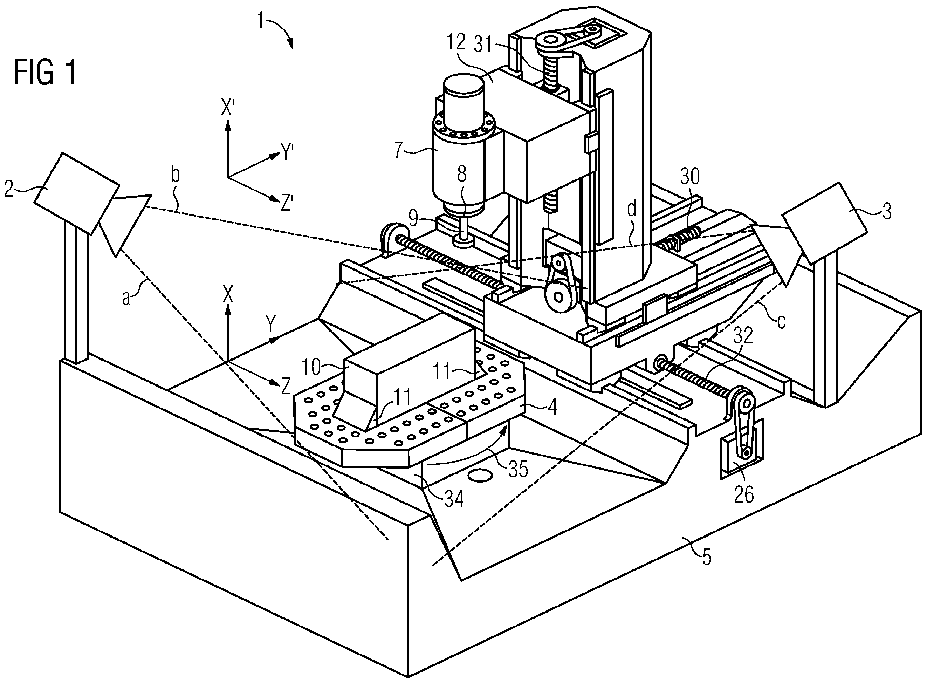

In Figur 1 ist in Form einer schematisierten perspektivischen Darstellung eine erfindungsgemäße Werkzeugmaschine 1 dargestellt. Die Werkzeugmaschine 1 ist dabei im Rahmen des Ausführungsbeispiels als Fräsmaschine ausgebildet. Die Werkzeugmaschine 1 weist ein ruhendes Maschinengestell 5 auf, über dem ein Maschinentisch 4 angeordnet ist. Der Maschinentisch 4 ist mittels eines Antriebs 34 drehbar, was in der Figur 1 durch einen Pfeil 35 angedeutet ist. Auf dem Maschinentisch 4 ist ein Gegenstand 10, der im Rahmen des Ausführungsbeispiels in Form eines zu bearbeitenden Werkstücks vorliegt, angeordnet. Das Werkstück 10 liegt dabei in Form eines Rohteils vor. Das Werkstück 10 wird von einer ebenfalls auf dem Maschinentisch angeordneten Werkstückspannvorrichtung 11, die zum Einspannen des Werkstücks 10 dient, gehalten.

Weiterhin weist die Werkzeugmaschine 1 ein Maschinenelement 7 auf, das im Rahmen des Ausführungsbeispiels als Motor ausgebildet ist. Der Motor 7 treibt rotierend ein Werkzeug 9 an, das im Rahmen des Ausführungsbeispiels als Fräser ausgebildet ist. Das Werkzeug 9 wird von einer Werkzeugaufnahmevorrichtung 8, welche mit einer Motorwelle des Motors 7 verbunden ist, gehalten. Der Motor 7 wird fachspezifisch auch als so genannter Spindelmotor bezeichnet. Der Motor 7 und damit das Werkzeug 9 kann über rotierend angetriebene Gewindespindeln 30, 31 und 32 in X-, Y- und Z-Richtung translatorisch verfahren werden. Über eine Motorverfahreinrichtung 12, die ausfahrbare mit dem Motor 7 verbundene Zylinder aufweist, kann der Motor 7 auch noch zusätzlich in Y-Richtung, in Richtung auf das Werkstück zu, verfahren werden.

Erfindungsgemäß weist die Werkzeugmaschine 1 eine erste Kamera 2 und eine zweite Kamera 3 auf, die das Werkstück 10 optisch erfassen, wobei die erste Kamera 2 und die zweite Kamera 3 an unterschiedlichen Positionen an der Werkzeugmaschine 1 angeordnet sind. Die erste Kamera 2 erfasst dabei alle Gegenstände, die sich in einem durch die beiden Linien a, b angedeuteten begrenzten Bildbereich befinden und die Kamera 3 erfasst alle Gegenstände, die sich in einem durch die beiden Linien d und c angedeuteten begrenzten Bildbereich befinden. Solchermaßen wird also das Werkstück 10 sowohl von der ersten Kamera 2 wie auch von der zweiten Kamera 3 optisch erfasst. Insbesondere werden von der ersten und der zweiten Kamera alle Gegenstände erfasst, die auf dem Maschinentisch 4 angeordnet sind.

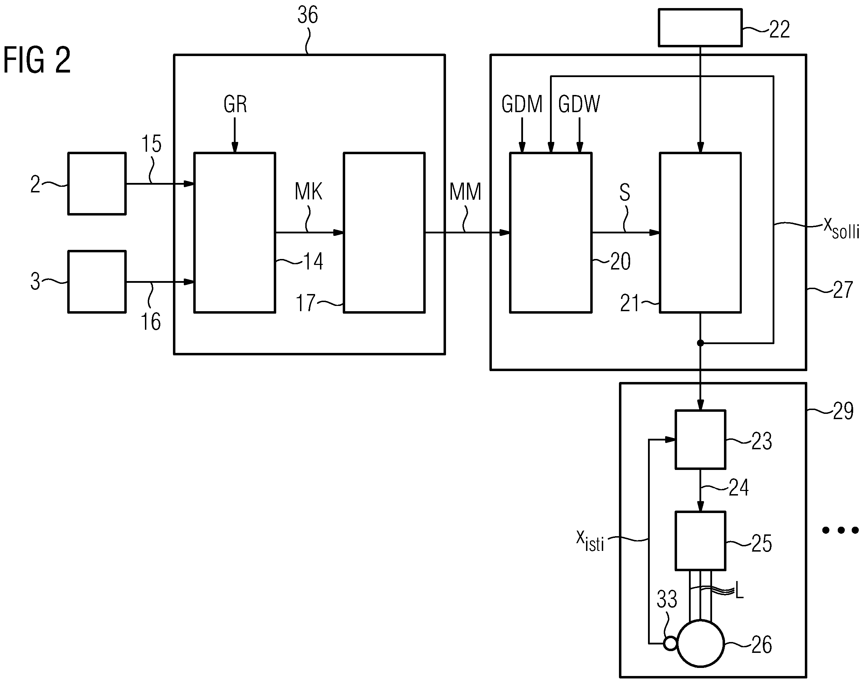

In Figur 2 ist in Form einer schematisierten blockförmigen Darstellung das erfindungsgemäße Verfahren dargestellt. Die erste Kamera 2 und die zweite Kamera 3 erzeugen Bildinformationen des Werkstücks 10, indem sie das Werkstück 10 optisch erfassen und entsprechende das Werkstück 10 abbildende Bildinformationen des Werkstücks 10 erzeugen. Die Bildinformationen werden an eine Modellermittlungseinheit 14 übermittelt, was durch zwei Pfeile 15 und 16 in Figur 2 dargestellt ist. Von der Modellermittlungseinheit 14 werden anhand der Bildinformationen ein auf ein Kamerakoordinatensystem X', Y' und Z' (siehe Figur 1) bezogenes 3-dimensionales geometrisches Modell MK des Werkstücks 10, das die Geometrie des Werkstücks 10, d.h. die äußere Kontur des Werkstücks, sowie seine Position und seine Orientierung im Raum beschreibt, ermittelt. Zur Ermittlung des 3-dimensionalen geometrischen Modells MK des Werkstücks 10 wird das Werkstück 10 anhand der von den beiden Kameras 2 und 3 gelieferten Bildinformationen optisch vermessen und seine Geometrie, Position und Orientierung im Raum ermittelt. Das 3-dimensionale geometrische Modell kann dabei z.B. in Form von Vektoren vorliegen, welche auf Punkte der äußeren Kontur des Werkstücks 10 zeigen. Die einzelnen Punkte, mit denen die Geometrie, d.h. die Kontur des Werkstücks 10, beschrieben wird, können z.B. mit einem Gitternetz miteinander verbunden werden. Die Ermittelung eines 3-dimensionalen geometrischen Modells eines Gegenstands aus von einem Kamerasystem erzeugten Bildinformationen des Gegenstands ist dabei allgemein bekannter Stand der Technik.

Die Ermittlung des 3-dimensionalen geometrischen Modells MK des Werkstücks 10 erfolgt dabei vorzugsweise unmittelbar vor Beginn der Bearbeitung des Werkstücks 10, so dass sichergestellt ist, dass das 3-dimensionale geometrische Modell MK des Werkstücks 10 mit der Geometrie des Werkstücks, d.h. mit der äußeren Kontur des Werkstücks sowie mit seiner Position und seiner Orientierung im Raum, übereinstimmt. Falls die Werkzeugmaschine eine Maschinentür aufweist, kann die Erstellung des 3-dimensionalen geometrischen Modells MK des Gegenstands unmittelbar nach Schließen der Maschinentür erfolgen.

Der Grad GR der Übereinstimmung der Geometrie des 3-dimensionalen geometrischen Modells MK des Werkstücks 10 mit dem tatsächlich physikalisch vorhandenen Werkstück 10 kann dabei im Rahmen des Ausführungsbeispiels vom Anwender vorgegeben werden. Das 3-dimensionale geometrische Modell MK des Werkstücks 10 wird von der Modellermittlungseinheit 14 unter Berücksichtigung des vorgegebenen Grads GR der Übereinstimmung ermittelt. Je nach gewähltem Grad GR der Übereinstimmung stimmt die Geometrie des 3-dimensionalen geometrischen Modells MK des Werkstücks mehr oder weniger gut mit der Geometrie des physikalisch vorhandenen Werkstücks überein. Bei sehr grob gewähltem Grad GR kann das Werkstück 10, z.B. als ein sogenanntes "geometrisches Primitiv", d.h. z.B. als Quader, Kugel oder Zylinder in dem 3-dimensionalen geometrischen Modell MK abgebildet sein.

Anschließend wird das auf das Kamerakoordinatensytem X', Y' und Z' bezogene 3-dimensionale geometrische Modell MK des Werkstücks 10 an eine Transformationseinheit 17 übermittelt und von der Transformationseinheit 17 in ein auf ein Maschinenkoordinatensystem X, Y, Z (siehe Figur 1) bezogenes 3-dimensionales geometrisches Modell MM des Werkstücks 10 transformiert. Das Maschinenkoordinatensystem X, Y, Z ist dabei das Koordinatensystem, welches auch bei der späteren Bearbeitung des Werkstücks von einer Steuereinrichtung 27 der Werkzeugmaschine, die üblicherweise in Form einer numerischen Steuerung vorliegt, als Bezugssystem verwendet wird. Die Modellermittlungseinheit 14 und die Transformationseinheit 17 sind dabei im Rahmen des Ausführungsbeispiels in Form von Software, welche im Rahmen des Ausführungsbeispiels auf einer Recheneinrichtung 36 abläuft, realisiert.

Die Steuereinrichtung 27 steuert die Bewegungen der Maschinenelemente, wie z.B. die des Motors 7, indem sie entsprechende Lagesollwerte xₛₒₗₗᵢ an die Antriebsstränge, welche z.B. die Gewindespindeln 30, 31 und 32 und die Motorverfahreinrichtung 12 antreiben, ausgibt. Weiterhin wird auch selbstverständlich die Rotationsbewegung des Werkzeugs 9 von der Steuereinrichtung 27 gesteuert. Jede Maschinenachse der Werkzeugmaschine 1 weist solchermaßen einen ihr zugeordneten Antriebsstrang auf, mit der im Rahmen des Ausführungsbeispiels der Motor 7 und damit die Werkzeugaufnahmevorrichtung 8 und das Werkzeug 9 in eine translatorische Verfahrrichtung X, Y oder Z verfahren werden können und das Werkstück mittels des Antriebs 34 gedreht werden kann. Jeder Antriebsstrang ermöglicht dabei ein Verfahren in eine Verfahrrichtung X, Y oder Z. Der Übersichtlichkeit halber ist in Figur 2 nur ein Antriebsstrang 29 dargestellt, wobei durch entsprechende Pünktchen in Figur 2 angedeutet dargestellt ist, dass der Antriebsstrang 29 i-fach vorhanden ist.

Zur Erzeugung der Lagesollwerte xₛₒₗₗᵢ für die einzelnen ifach vorhanden Antriebsstränge weist die Steuereinrichtung 27 eine Sollwerterzeugungseinheit 21 auf, die anhand eines Teileprogramms 22, das von der Steuereinrichtung 27 eingelesen wird, die Lagesollwerte xₛₒₗₗᵢ erzeugt. Im Teileprogramm 22 sind dabei z.B. die vom Werkzeug 9 und vom Werkstück 10 durchzuführenden Verfahrbewegungen in Form von Befehlen angegeben. Die Lagesollwerte xₛₒₗₗᵢ werden an eine Regeleinrichtung 23 als Eingangsgröße übermittelt, die entsprechend den Lagesollwerten xₛₒₗₗᵢ einen Stromrichter 25 ansteuert, was durch einen Pfeil 24 in Figur 2 dargestellt ist. Entsprechend den Vorgaben der Regeleinrichtung 23 steuert dabei der Stromrichter 25 über elektrische Leitungen 11 z.B. einen Motor 26 an, der z.B. die Gewindespindel 32 antreibt und solchermaßen ein Verfahren des Werkzeugs 9 in Z-Richtung erlaubt. Die Lage der Gewindespindel 32, d.h. im Rahmen des Ausführungsbeispiels, die Drehlage xᵢₛₜᵢ wird von einem Drehgeber 33 ermittelt und als Regelistgröße der Regeleinrichtung 23 zugeführt. Die Regeleinrichtung 23, der Stromrichter 25 und der Motor 26 bilden zusammen den beispielhaft dargestellten Antriebsstrang 29.

Zur Kollisionsüberwachung weist die Steuereinrichtung 27 eine Kollisionsüberwachungseinheit 20 auf. Diese ermittelt hierzu in Bezug auf das Maschinenkoordinatensystem X, Y und Z ein 3-dimensionales geometrisches Modell eines Maschinenelements, wie z.B. des Motors 7, anhand von Geometriedaten GDM des Maschinenelements und Lagedaten. Die Geometriedaten GDM des Maschinenelements 7 sind dabei in der Steuereinrichtung 27 in einer der Übersichtlichkeit halber nicht mehr in Figur 2 dargestellten Speichereinrichtung hinterlegt. Die Geometriedaten beschreiben dabei die Geometrie, d.h. die äußere Kontur des Maschinenelements 7. Die Lagedaten liegen dabei im Rahmen des Ausführungsbeispiels in Form der Lagesollwerte xₛₒₗₗᵢ der einzelnen Antriebsstränge vor und werden von der Sollwerterzeugungseinheit 21 an die Kollisionsüberwachungseinheit 20 übermittelt. Der Index i drückt dabei aus, dass für jeden der ifach vorhandenen Antriebsstränge dem jeweiligen Antriebsstrang zugehörige Lagesollwerte von der Sollwerterzeugungseinheit 21 erzeugt werden. Alternativ hierzu können die Lagedaten aber auch in Form der Lageistwerte xᵢₛₜᵢ der einzelnen Antriebsstränge vorliegen.

Aus den Geometriedaten GDM und den Lagedaten xₛₒₗₗᵢ wird, wie schon gesagt, von der Kollisionsüberwachungseinheit 20 ein 3-dimensionales geometrisches Modell des Maschinenelements 7, das die Geometrie des Maschinenelements sowie seine Position und Orientierung im Raum beschreibt, ermittelt.

Zur Realisierung der Kollisionsüberwachung wird von der Transformationseinheit 17 das auf das Maschinen-Koordinatensystem X, Y, Z bezogene 3-dimensionale geometrische Modell MM des Werkstücks 10 an die Kollisionsüberwachungseinheit 20 übermittelt. Im Rahmen des Ausführungsbeispiels wird von der Kollisionsüberwachungseinheit 20 das auf das Maschinenkoordinatensystem bezogene 3-dimensionale geometrische Modell MM des Werkstücks 10, d.h. genauer ausgedrückt die Position und Orientierung des Werkstücks 10 im Raum, laufend anhand der Lagedaten xₛₒₗₗᵢ aktualisiert, d.h. es wird die aktuelle Position und Orientierung des Werkstücks 10, z.B. im Falle einer Drehbewegung des Werkstücks 10 mittels des Antriebs 34, was durch einen Pfeil 35 in Figur 1 dargestellt ist, entsprechend dem 3-dimensionalen geometrischen Modell MM des Werkstücks 10 angepasst.

Alternativ hierzu kann das 3-dimensionale geometrische Modell MM des Werkstücks 10 aber auch ständig aktualisiert werden indem fortlaufend das Werkstück 10 optisch erfasst wird, fortlaufend ein aktuelles auf das Kamerakoordinatensytem X', Y' und Z' bezogenes 3-dimensionales geometrisches Modell MK des Werkstücks 10 ermittelt wird und das 3-dimensionale geometrische Modell MK fortlaufend an die Transformationseinheit 17 übermittelt wird und von der Transformationseinheit 17 fortlaufend in ein auf ein Maschinenkoordinatensystem X, Y, Z (siehe Figur 1) bezogenes 3-dimensionales geometrisches Modell MM des Werkstücks 10 transformiert wird und das geometrisches Modell MM fortlaufend an die Kollisionsüberwachungseinheit 20 übermittelt wird. Der Kollisionsüberwachungseinheit 20 steht dann immer ein aktuelles geometrisches Modell MM für die Kollisionsermittelung zur Verfügung.

Falls die Werkzeugmaschine 1 aber eine Kinematik aufweist, die kein Drehen des Werkstücks 10 ermöglicht, weil z.B. der Maschinentisch 4 unbeweglich mit dem Maschinengestell 5 verbunden ist, so braucht das zu Beginn erstellte auf das Maschinenkoordinatensystem bezogene 3-dimensionale geometrische Modell MM des Werkstücks 10 nicht aktualisiert zu werden, da sich dessen Position und Orientierung im Raum bei der Bearbeitung des Werkstücks 10 nicht verändern.

Von der Kollisionsüberwachungseinheit 20 wird erfindungsgemäß überwacht, ob bei einer Bewegung des Werkzeugs 10 und/oder des Maschinenelements 7, bei Fortsetzung der Bewegung eine Kollision zwischen dem auf das Maschinenkoordinatensystem bezogenen 3-dimensionalen geometrischen Modells MM des Werkstücks und dem 3-dimensionalen geometrischen Modell des Maschinenelements eine Kollision zu erwarten ist und insbesondere stattfinden wird, wobei, falls eine Kollision zu erwarten ist, und insbesondere stattfinden wird, von der Kollisionsüberwachungseinheit 20 die Bewegung gestoppt wird, indem von der Kollisionsüberwachungseinheit 20 ein Stoppsignal S an die Sollwerterzeugungseinheit 21 übermittelt wird. Wenn die Sollwerterzeugungseinheit 21 das Stoppsignal S empfängt, werden von ihr entsprechende Lagesollwerte xₛₒₗₗᵢ erzeugt, die ein Stoppen der Bewegung des Werkstücks 10 und/oder des Maschinenelements zur Folge haben. Die Werkzeugmaschine 1 wird dabei in der Regel komplett gestoppt. Eine Kollision ist dann zu erwarten, wenn eine hohe Wahrscheinlichkeit besteht, dass wenn die Bewegung des auf das Maschinenkoordinatensystem bezogenen 3-dimensionalen geometrischen Modells MM des Werkstücks und/oder die Bewegung des 3-dimensionalen geometrischen Modells des Maschinenelements fortgesetzt wird, mit hoher Wahrscheinlichkeit eine Kollision zwischen beiden Modellen stattfinden wird.

Die Bewegung des Werkstücks und/oder des Maschinenelements wird dabei vorzugsweise immer im so viel im Voraus, unter Berücksichtigung der beteiligten Massen und zur Verfügung stehenden Antriebsmomente der einzelnen Motoren der Werkzeugmaschine, ermittelt, dass die Bewegung des Werkstücks 10 und/oder des Maschinenelements 7 noch durch rechtzeitiges Abbremsen der Bewegung bis zum Stopp der Bewegung verhindert werden kann.

Im Rahmen einer vorteilhaften Ausbildung der Erfindung wird von der Kollisionsüberwachungseinheit 20 zusätzlich auch in Bezug auf das Maschinenkoordinatensystem X, Y, Z ein 3-dimensionales geometrisches Modell des Werkzeugs 9 ermittelt, wobei bei einer Bewegung des Werkstücks 10 und/oder des Werkzeugs 9 von der Kollisionsüberwachungseinheit 20 überwacht wird, ob bei Fortsetzung der Bewegung eine ungewollte Kollision zwischen dem auf das Maschinen-Koordinatensystem bezogenen 3-dimensionalen geometrischen Modells MM des Werkstücks 10 und dem 3-dimensionalen geometrischen Modell des Werkzeugs 9 zu erwarten ist, wobei falls eine ungewollte Kollision zu erwarten ist, die Bewegung gestoppt wird.

Das 3-dimensionale geometrische Modell des Werkzeugs wird dabei anhand von Geometriedaten GDW des Werkzeugs und der Lagedaten xₛₒₗₗᵢ ermittelt, wobei das 3-dimensionale geometrische Modell des Werkzeugs die Geometrie des Werkzeugs sowie seine Position und Orientierung im Raum beschreibt.

Die Geometriedaten GDW des Werkzeugs sind dabei in einem der Übersichtlichkeit halber nicht mehr dargestellten Speicher der Steuereinrichtung 27 hinterlegt. Der Bediener der Werkzeugmaschine kann dabei z.B. über eine, der Übersichtlichkeit halber in Figur 1 nicht mehr dargestellte Bedieneinrichtung der Werkzeugmaschine, per Hand eingeben, welches Werkzeug sich gerade zur Bearbeitung in der Werkzeugaufnahmevorrichtung 8 befindet und die Kollisionsüberwachungseinheit 20 liest die zu dem betreffenden Werkzeug zugehörigen Geometriedaten GDW ein. Falls die Werkzeugmaschine über einen automatischen Werkzeugwechsler verfügt, weiß die Steuereinrichtung 27 automatisch intern, welches Werkzeug sich gerade in der Werkzeugaufnahmevorrichtung 8 befindet und die Kollisions-überwachungseinrichtung 20 liest die zu dem Werkzeug zugehörigen Geometriedaten GDW ein.

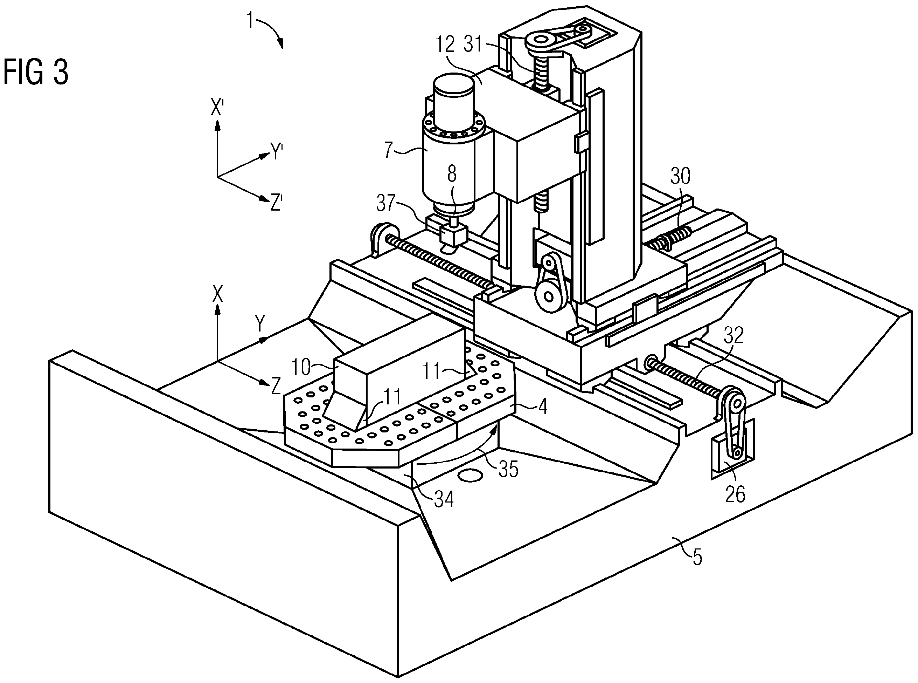

In Figur 3 ist eine weitere Ausführungsform der Erfindung dargestellt. Diese Ausführungsform entspricht im Grundaufbau im Wesentlichen der vorstehenden, in Figur 1 beschriebenen Ausführungsform. Gleiche Elemente sind daher hier mit den gleichen Bezugszeichen versehen wie in Figur 1. Der wesentliche Unterschied besteht darin, dass bei der Ausführungsform gemäß Figur 3 die beiden Kameras 2 und 3 durch eine einzelne Kamera 37 ersetzt wurden, die wie ein Werkzeug in die Werkzeugaufnahmevorrichtung 8 eingespannt ist. Zur optischen Erfassung des Gegenstands, d.h. im Rahmen des Ausführungsbeispiels des Werkstücks 10, wird die Kamera 37 mittels der Motoren der Werkzeugmaschine bewegt und das Werkstück 10 an mindestens zwei verschiedenen Positionen der Kamera 37 von der Kamera 37 optisch erfasst. Die Kamera 37 erzeugt dann entsprechende Bildinformationen, die entsprechend von der Modellermittlungseinheit 14 zur Ermittlung des auf das Kamerasystem X', Y' und Z' bezogenen 3-dimensionalen geometrischen Modells MK des Werkstücks 10 verwendet werden. Diese Ausführungsform der Erfindung weist den Vorteil auf, dass nur eine einzelne Kamera 37 benötigt wird, um das 3-dimensionale geometrische Modell MM des Gegenstands zu erstellen. Die Kamera 37 nimmt dabei den Gegenstand aus mindestens zwei unterschiedlichen Perspektiven auf. Selbstverständlich kann die Kamera 37 aber auch noch den Gegenstand aus mehr als zwei unterschiedlichen Perspektiven aufnehmen. Zur optischen Erfassung des Werkstücks aus mindestens zwei unterschiedlichen Perspektiven kann alternativ oder zusätzlich auch der Gegenstand bewegt werden und so, z.B. im Rahmen des Ausführungsbeispiels, mittels des Abtriebs 35 gedreht werden.

Weiterhin können bei der Ausführungsform gemäß Figur 1 auch mehr als zwei Kameras zur optischen Erfassung des Gegenstands eingesetzt werden.

Weiterhin sei an dieser Stelle angemerkt, dass im Rahmen des Ausführungsbeispiels der Gegenstand, der optisch erfasst wird, als Werkstück ausgebildet ist. Der Gegenstand kann aber z.B. auch in Form der Werkstückspannvorrichtung 11 oder eines anderen beliebigen Gegenstandes der optisch erfasst wird, ausgebildet sein. So können z.B. Modelle von sämtlichen Gegenständen, die optisch von der Kamera oder den Kameras erfasst werden, erstellt werden und eine Kollisionsüberwachung mit den Gegenständen, in analoger Form wie zum Werkstück 10 beschrieben, durchgeführt werden.

Weiterhin sei an dieser Stelle angemerkt, dass im Rahmen des Ausführungsbeispiels, die Kollisionsüberwachungseinheit 20 in Form von Software, welche von einem Prozessor der Steuereinrichtung 27 ausgeführt wird, ausgebildet ist.

Weiterhin sei an dieser Stelle angemerkt, dass die Transformationseinheit 17 und die Kollisionsüberwachungseinheit 20 auch in Form von Software, welche auf von einem Prozessor der Steuereinrichtung 27 ausgeführt wird, vorliegen können und solchermaßen Bestandteil der Steuereinrichtung 27 sein können. Die Recheneinrichtung 36 kann in diesem Fall entfallen.

## Patentansprüche

1. Verfahren zur Vermeidung einer Kollision bei einer Werkzeugmaschine (1), wobei von einer Kamera (2,3,37) ein Gegenstand (10) optisch erfasst wird und Bildinformationen des Gegenstands (10) erzeugt werden, wobei anhand der Bildinformationen ein auf ein Kamerakoordinatensystem (X',Y',Z') bezogenes 3-dimensionales geometrisches Modell (MK) des Gegenstands (10) ermittelt wird, wobei das auf das Kamerakoordinatensystem (X',Y',Z') bezogene 3-dimensionale geometrische Modell (MK) des Gegenstands (10) in ein auf ein Maschinenkoordinatensystem (X,Y,Z) bezogenes 3-dimensionales geometrisches Modell (MM) des Gegenstands (10) transformiert wird, wobei im Bezug auf das Maschinenkoordinatensystem (X,Y,Z) ein 3-dimensionales geometrisches Modell eines Maschinenelements (7) der Werkzeugmaschine anhand von Geometriedaten (GDW) des Maschinenelements (7) und Lagedaten (xₛₒₗₗᵢ) ermittelt wird, wobei bei einer Bewegung des Gegenstands (10) und/oder des Maschineelements (7) überwacht wird, ob bei Fortsetzung der Bewegung eine Kollision zwischen dem auf das Maschinenkoordinatensystem (X,Y,Z) bezogenen 3-dimensionalen geometrischen Modells (MM) des Gegenstands (10) und dem 3-dimensionalen geometrischen Modell des Maschinenelements zu erwarten ist, wobei falls eine Kollision zu erwarten ist, die Bewegung gestoppt wird, **dadurch gekennzeichnet, dass** von einer einzelnen Kamera (37) der Gegenstand (10) optisch erfasst wird, wobei die Kamera (37) und/oder der Gegenstand (10) zur Erfassung des Gegenstands (10) bewegt wird und der Gegenstand (10) aus mindestens zwei verschiedenen Perspektiven von der Kamera (37) optisch erfasst wird, wobei die Kamera (37) bei der Erfassung in eine Werkzeugaufnahmevorrichtung (8) der Werkzeugmaschine (1) eingespannt ist.

2. Verfahren nach Anspruch 1, **dadurch gekennzeichnet, dass** im Bezug auf das Maschinenkoordinatensystem (X,Y,Z) ein 3-dimensionales geometrisches Modell eines Werkzeugs (9) anhand von Geometriedaten (GDW) des Werkzeugs (9) und Lagedaten (xₛₒₗₗᵢ) ermittelt wird, wobei bei einer Bewegung des Gegenstands (10) und/oder des Werkzeugs (9) überwacht wird, ob bei Fortsetzung der Bewegung eine ungewollte Kollision zwischen dem auf das Maschinenkoordinatensystem (X,Y,Z) bezogenen 3-dimensionalen geometrischen Modell (MM) des Gegenstands (10) und dem 3-dimensionalen geometrischen Modell des Werkzeugs zu erwarten ist, wobei falls eine ungewollte Kollision zu erwarten ist, die Bewegung gestoppt wird.

3. Verfahren nach einem der vorhergehen Ansprüche, **dadurch gekennzeichnet, dass** der Gegenstand (10) als Werkstück oder als Werkstückspannvorrichtung ausgebildet ist.

4. Verfahren nach einem der vorhergehenden Ansprüche, **dadurch gekennzeichnet, dass** der Grad (GR) der Übereinstimmung der Geometrie des auf das Kamerakoordinatensystem (X',Y',Z') bezogenen 3-dimensionalen geometrischen Modells (MK) des Gegenstands (10) mit dem Gegenstand (10) vorgegebenen wird und dass das auf das Kamerakoordinatensystem (X',Y',Z') bezogene 3-dimensionale geometrische Modell (MK) des Gegenstands (10) unter Berücksichtigung des vorgegebenen Grads (GR) der Übereinstimmung ermittelt wird.

5. Werkzeugmaschine aufweisend,
- eine Kamera (2, 3, 37) zur optischen Erfassung eines Gegenstands (10) und Erzeugung von Bildinformationen des Gegenstands (10),
- eine Modellermittelungseinheit (14) zur Ermittelung eines auf ein Kamerakoordinatensystem (X',Y',Z') bezogenen 3-dimensionalen geometrischen Modells (MK) des Gegenstands (10) anhand von den Bildinformationen,
- eine Transformationseinheit (17) zur Transformation des auf das Kamerakoordinatensystem (X',Y',Z') bezogenen 3-dimensionalen geometrischen Modells (MK) des Gegenstands (10) in ein auf ein Maschinenkoordinatensystem (X,Y,Z) bezogenes 3-dimensionales geometrisches Modell (MM) des Gegenstands (10),
- eine Kollisionsüberwachungseinheit (20), wobei von der Kollisionsüberwachungseinheit (20) im Bezug auf das Maschinenkoordinatensystem (X,Y,Z) ein 3-dimensionales geometrisches Modell eines Maschinenelements der Werkzeugmaschine (1) anhand von Geometriedaten des Maschinenelements (7) und Lagedaten (xₛₒₗₗᵢ) ermittelbar ist, wobei die Kollisionsüberwachungseinheit (20) derart ausgebildet ist, dass bei einer Bewegung des Gegenstands (10) und/oder des Maschinenelements (7) von der Kollisionsüberwachungseinheit (20) überwacht wird, ob bei Fortsetzung der Bewegung eine Kollision zwischen dem auf das Maschinenkoordinatensystem (X,Y,Z) bezogenen 3-dimensionalen geometrisches Modells (MM) des Gegenstands (10) und dem 3-dimensionalen geometrischen Modell des Maschinenelements zu erwarten ist, wobei die Kollisionsüberwachungseinheit (20) derart ausgebildet ist, dass falls eine Kollision zu erwarten ist, von der Kollisionsüberwachungseinheit (20) ein Stoppsignal (S) zum Stoppen der Bewegung erzeugt wird, **dadurch gekennzeichnet, dass** die Werkzeugmaschine derart ausgebildet ist, dass von einer einzelnen Kamera (37) der Gegenstand (10) optisch erfasst wird, wobei die Kamera (37) und/oder der Gegenstand (10) zur Erfassung des Gegenstands (10) bewegt wird und der Gegenstand (10) aus mindestens zwei verschiedenen Perspektiven von der Kamera (37) optisch erfasst wird, wobei die Kamera (37) bei der Erfassung in eine Werkzeugaufnahmevorrichtung (8) der Werkzeugmaschine (1) eingespannt ist.

## Claims

1. Method for avoiding collision in a machine tool (1), wherein an object (10) is captured optically by a camera (2, 3, 37) and image information of the object (10) is generated, wherein said image information is used to determine a 3-dimensional geometrical model (MK) of the object (10) based on a camera coordinate system (X',Y',Z'), wherein the 3-dimensional geometrical model (MK) of the object (10) based on the camera coordinate system (X',Y',Z') is transformed into a 3-dimensional geometrical model (MM) of the object (10) based on a machine coordinate system (X,Y,Z), wherein with reference to the machine coordinate system (X,Y,Z) a 3-dimensional geometrical model of a machine element (7) of the machine tool is determined using geometrical data (GDW) of the machine element (7) and position data (xₛₒₗₗᵢ), wherein in the event of a movement of the object (10) and/or the machine element (7) monitoring takes place to establish whether a collision between the 3-dimensional geometrical model (MM) of the object (10) based on the machine coordinate system (X,Y,Z) and the 3-dimensional geometrical model of the machine element is to be expected should the movement continue, wherein the movement is stopped if a collision is to be expected, **characterised in that** the object (10) is optically captured by a single camera (37), wherein the camera (37) and/or the object (10) is/are moved in order to capture the object (10) and the object (10) is captured optically from at least two different perspectives by the camera (37), wherein the camera (37) is clamped into a tool mounting device (8) of the machine tool (1) during capture.

2. Method according to claim 1, **characterised in that** with reference to the machine coordinate system (X,Y,Z) a 3-dimensional geometrical model of a tool (9) is determined using geometrical data (GDW) of the tool (9) and position data (xₛₒₗₗᵢ), wherein in the event of a movement of the object (10) and/or the tool (9) monitoring takes place to establish whether an unwanted collision between the 3-dimensional geometrical model (MM) of the object (10) based on the machine coordinate system (X,Y,Z) and the 3-dimensional geometrical model of the tool is to be expected should the movement continue, wherein the movement is stopped if an unwanted collision is to be expected.

3. Method according to one of the preceding claims, **characterised in that** the object (10) is embodied as a workpiece or as a workpiece tensioning device.

4. Method according to one of the preceding claims, **characterised in that** the degree (GR) of correspondence between the geometry of the 3-dimensional geometrical model (MK) of the object (10) based on the camera coordinate system (X',Y',Z') and the object (10) is predefined and that the 3-dimensional geometrical model (MK) of the object (10) based on the camera coordinate system (X',Y',Z') is determined taking into account the predefined degree (GR) of correspondence.

5. Machine tool having
- a camera (2, 3, 37) for optically capturing an object (10) and generating image information of the object (10),
- a model determination unit (14) for determining a 3-dimensional geometrical model (MK) of an object (10) based on a camera coordinate system (X',Y',Z') using the image information,
- a transformation unit (17) for transforming the 3-dimensional geometrical model (MK) of the object (10) based on the camera coordinate system (X',Y',Z') into a 3-dimensional geometrical model (MM) of the object (10) based on a machine coordinate system (X,Y,Z),
- a collision monitoring unit (20), wherein by means of the collision monitoring unit (20) a 3-dimensional geometrical model of a machine element of the machine tool (1) can be determined with reference to the machine coordinate system (X,Y,Z) using geometrical data of the machine element (7) and position data (xₛₒₗₗᵢ), wherein the collision monitoring unit (20) is embodied such that, in the event of a movement of the object (10) and/or the machine element (7), the collision monitoring unit (20) monitors whether a collision between the 3-dimensional geometrical model (MM) of the object (10) based on the machine coordinate system (X,Y,Z) and the 3-dimensional geometrical model of the machine element is to be expected should the movement continue, wherein the collision monitoring unit is embodied such that, if a collision is to be expected, the collision monitoring unit (20) generates a stop signal (S) to stop the movement, **characterised in that** the machine tool is embodied such that the object (10) is captured optically by a single camera (37), wherein the camera (37) and/or the object (10) is/are moved in order to capture the object (10) and the object (10) is captured optically from at least two different perspectives by the camera (37), wherein the camera is clamped into a tool mounting device (8) of the machine tool (1) during capture.

## Revendications

1. Procédé pour éviter une collision dans une machine-outil (1), dans lequel on détecte optiquement un objet (10) par une caméra (2, 3, 37) et on produit des informations d'image de l'objet (10), dans lequel, à l'aide des informations d'image, on détermine de l'objet (10) un modèle (MK) géométrique en 3 dimensions rapporté à un système (X', Y', Z') de coordonnées de la caméra, dans lequel on transforme le modèle (MK) géométrique en 3 dimension rapporté au système (X', Y', Z') de coordonnées de la caméra de l'objet (10) en un modèle (MM) géométrique en 3 dimensions rapporté à un système (X, Y, Z) de coordonnées de machine de l'objet (10), dans lequel on détermine, par rapport au système (X, Y, Z) de coordonnées de machine, un modèle géométrique en 3 dimensions de l'élément (7) de la machine-outil à l'aide de données (GDW) géométriques de l'élément (7) de la machine et de données (Xₛₒₗₗᵢ ) de position, dans lequel, si l'objet (10) et/ou l'élément (7) de la machine se déplace, on contrôle, lorsque le déplacement se poursuit, s'il faut s'attendre à une collision entre le modèle (MM) géométrique en 3 dimensions, rapporté au système (X, Y, Z) de coordonnées de machine, de l'objet (10) et le modèle géométrique en 3 dimensions de l'élément de la machine, dans lequel, s'il faut s'attendre à une collision, on interrompt le déplacement, **caractérisé en ce que** l'on détecte optiquement l'objet par une caméra (37) individuelle, la caméra (37) et/ou l'objet (10) étant déplacé (s) pour détecter l'objet (10) et l'objet (10) étant détecté optiquement par la caméra à partir d'au moins deux perspectives différentes, la caméra (37) étant serrée dans un dispositif (8) de réception d'outil de la machine-outil (1).

2. Procédé suivant la revendication 1, **caractérisé en ce que** par rapport au système (X, Y, Z) de coordonnées de la machine, on détermine le modèle géométrique en 3 dimensions d'un outil (9) à l'aide de données (GDW) géométriques de l'outil (9) et de données (xₛₒₗₗᵢ ) de position, dans lequel, s'il se produit un déplacement de l'objet (10) et/ou l'élément (7) de la machine, on contrôle, lorsque le déplacement se poursuit, s'il faut s'attendre à une collision intempestive entre le modèle (MM) géométrique en 3 dimensions rapporté au système (X, Y, Z) de coordonnées de machine de l'objet (10) et le modèle géométrique en 3 dimensions de l'outil, en arrêtant le déplacement, s'il faut s'attendre à une collision intempestive.

3. Procédé suivant l'une des revendications précédentes, **caractérisé en ce que** l'objet (10) est conformé sous la forme d'une pièce ou d'un dispositif de serrage de pièce.

4. Procédé suivant l'une des revendications précédentes, **caractérisé en ce que** l'on prescrit le degré (GR) de coïncidence de la géométrie du modèle (MK) géométrique en 3 dimensions rapporté à un système (X', Y', Z') de coordonnées de la caméra à l'objet (10) et **en ce que** l'on détermine le modèle (MK) géométrique en 3 dimensions rapporté au système (X', Y', Z') de coordonnées de la caméra de l'objet (10) en tenant compte du degré (GR) donné à l'avance de coïncidence.

5. Machine-outil comportant
- une caméra (2, 3, 37) de détection optique d'un objet (10) et de production d'informations d'image de l'objet (10),
- une unité (14) de détermination de modèle pour déterminer un modèle (MK) géométrique en 3 dimensions, rapporté à un système (X', Y', Z') de coordonnées de caméra, de l'objet (10) à l'aide des informations d'image,
- une unité (17) de transformation du modèle (MK) géométrique en 3 dimensions, rapporté au système (X', Y', Z') de coordonnées de caméra, de l'objet (10) en un modèle (MM) géométrique en 3 dimensions, rapporté au système (X, Y, Z) de coordonnées de machine, de l'objet (10),
- une unité (20) de contrôle de collision, dans laquelle il peut être déterminé par l'unité (20) de contrôle de collision, par rapport au système (X, Y, Z) de coordonnées de machine, un modèle géométrique en 3 dimensions d'un élément de machine de la machine-outil (1) à l'aide de données géométriques de l'élément (7) de machine et de données (xₛₒₗₗᵢ) de position, l'unité (20) de contrôle de collision étant constituée de manière à contrôler, par l'unité (20) de contrôle de collision lors d'un déplacement de l'objet (10) et/ou de l'élément (7) de machine, si, alors que le déplacement se poursuit, on doit s'attendre à une collision entre le modèle (MM) géométrique en 3 dimensions, rapporté au système (X, Y, Z) de coordonnées de machine, de l'objet (10) et le modèle géométrique en 3 dimensions de l'élément de machine, l'unité (20) de contrôle de collision étant constituée de manière à ce que, si une collision est escomptée, produire par l'unité (20) de contrôle de collision un signal (S) d'arrêt pour arrêter le déplacement, **caractérisée en ce que** la machine-outil est constituée de manière à ce que l'objet (10) soit détecté optiquement par une caméra (37) individuelle, la caméra (37) et/ou l'objet (10) étant déplacés pour la détection de l'objet (10) et l'objet (10) étant détecté optiquement par la caméra (37) à partir d'au moins deux perspectives différentes, la caméra (37) étant serrée lors de la détection dans un dispositif (8) de serrage d'outil de la machine-outil (1).
